# EUROPÄISCHE PATENTSCHRIFT

(11) **EP 2 308 794 B1**
(45) Veröffentlichungstag und Bekanntmachung des Hinweises auf die Patenterteilung: **20.08.2014**
(21) Anmeldenummer: 10011280.4
(22) Anmeldetag: 28.09.2010
(51) Int. Cl.: B66F 9/20, B62B 3/06, B62D 51/00, B66F 9/075, B62B 5/00, B62B 5/06, B62D 51/04

(54) **Deichselgeführtes Flurföderzeug, insbesondere Hubwagen**
Industrial truck led by a drawbar, in particular fork lift
Chariot de manutention commandé par timon, en particulier chariot élévateur

(30) Priorität: 12.10.2009 DE 102009049058; 03.11.2009 DE 102009051678
(43) Veröffentlichungstag der Anmeldung: 13.04.2011
(73) Patentinhaber: OM Carrelli Elevatori S.p.A., 20020 Lainate (MI) (IT)
(72) Erfinder: Wident, Alain, 60480 Reuil sur Brèche (FR)
(74) Vertreter: Geirhos, Johann

(56) Entgegenhaltungen:
- EP-A2- 1 016 569
- EP-B1- 1 238 896
- DE-A1- 10 159 565
- US-A1- 2007 137 904

## Beschreibung

Die Erfindung betrifft ein deichselgeführtes Flurförderzeug, insbesondere Hubwagen, mit einer Deichsel, die einen Deichselfuß, einen Deichselschaft und einen Deichselkopf umfasst, wobei die Deichsel mittels des Deichselfußes an einem Antriebsteil des Flurförderzeugs um eine im Wesentlichen vertikale Schwenkachse schwenkbar gelagert ist und der Deichselschaft an einem deichselfußnahen Bereich an dem Deichselfuß um eine im Wesentlichen horizontale Schwenkachse schwenkbar gelagert ist und an einem deichselkopfnahen Bereich mit dem Deichselkopf versehen ist, wobei das Flurförderzeug mit einem Tastenfeld versehen ist.

Aus der US 2007/0137904 A1 ist ein gattungsgemäßes Flurförderzeug bekannt, das mit einer Auslaufeinrichtung (Coast Control System) versehen, die verhindert, dass die Deichsel beim Loslassen in einen oberen Bremsbereich zurückschwenkt. Die Auslaufeinrichtung ist von einem Hydraulikzylinder gebildet, der zwischen dem Deichselschaft und dem Deichselfuß angeordnet ist und mittels eines elektrisch betätigbaren Ventils blockierbar ist. Die Auslaufeinrichtung ist an dem Deichselschaft unterhalb einer Abdeckung angeordnet. An der Abdeckung können Aktivierungstasten für die Auslaufeinrichtung angeordnet sein.

Deichselgeführte Flurförderzeuge sind als Hubwagen, insbesondere Niederhubwagen oder Hochhubwagen, und Kommissionierer bekannt. Mit der an dem Antriebsteil um die vertikale Schwenkachse schwenkbaren Deichsel erfolgt die Bedienung des Flurförderzeugs, wobei durch Verschwenken der Deichsel um die vertikale Schwenkachse ein Antriebsrad des Flurförderzeugs gelenkt werden kann und mittels Bedienelementen, beispielsweise Drehschaltern oder Tastschaltern, an dem Deichselkopf ein Fahrantrieb und ein Hubantrieb des Flurförderzeugs gesteuert werden kann. An dem Deichselkopf sind in der Regel noch weitere Bedienelemente angeordnet, beispielsweise ein Sicherheitsschalter und ein Betätigungsschalter für eine als Hupe ausgebildete Signaleinrichtung.

Zur Inbetriebnahme des Flurförderzeugs ist es bekannt, einen Schlüsselschalter vorzusehen, der an dem Antriebsteil angeordnet ist, wobei durch den Schlüsselschalter eine Freigabe des Flurförderzeugs erfolgen kann und das Flurförderzeug an- und abgeschalten werden kann. Zudem ist bereits bekannt, ein Tastenfeld zur Überprüfung der Zugangsberechtigung bzw. als Zugangskontrolle vorzusehen, an dem von einer Bedienperson ein Pin-Code eingegeben werden kann. An dem Tastenfeld können weiterhin Betriebsparameter des Flurförderzeugs von der Bedienperson eingeben und verändert werden, beispielsweise Fahrparameter oder Parameter des Hubantriebs, mit denen die Bedienperson die Fahr- und Betriebseigenschaften an persönliche Vorlieben oder Einsatzbedingungen anpassen kann.

Bei bekannten Flurförderzeugen ist das Tastenfeld an dem Antriebsteil des Flurförderzeugs angeordnet, beispielsweise im Bereich der Oberseite bzw. der Vorderseite des Antriebsteils. Bei gattungsgemäßen deichselgeführten Flurförderzeugen wird einerseits der Antriebsteil mit einer möglichst geringen Höhe ausgebildet, um der Bedienperson eine optimale Sicht auf die Lastgabeln eines Lastteils zu ermöglichen. Andererseits soll das Tastenfeld an dem Antriebsteil eine ergonomisch günstige Höhe bei der Bedienung durch die Bedienperson aufweisen. Bei bekannten Flurförderzeugen ist das Tastenfeld an dem Antriebsteil aufgrund der Abmessungen des Antriebsteils in der Regel unter ergonomischen Gesichtspunkten zu tief angeordnet, wodurch sich die Bedienperson mit dem Oberkörper bücken muss und eine gebückte Haltung einnehmen muss, um das Tastenfeld zu erreichen und zu bedienen. Bei einer Anordnung des Tastenfeldes im Bereich der Oberseite bzw. Vorderseite des Antriebsteils ergibt sich zudem eine ungeschützte Anordnung des Tastenfeldes, so dass das Tastenfeld im Betrieb des Flurförderzeugs leicht beschädigt werden kann.

Aus der gattungsgemäßen EP 1 016 569 A2 ist bereits bekannt, ein als Zugangskontrolle durch Eingabe eines PIN-Codes verwendetes Tastenfeld an der Unterseite des Deichselkopfes anzuordnen, um eine geschützte Anordnung des Tastenfeldes zu erzielen. Die Anordnung des Tastenfeldes an der Unterseite des Deichselkopfes führt jedoch dazu, dass im normalen Betrieb des Flurförderzeugs das Tastenfeld von der Bedienperson nicht eingesehen werden kann und somit nicht bedient werden kann, wodurch das Tastenfeld lediglich als Zugangskontrolle bei senkrecht stehender Deichsel verwendet werden kann.

Der vorliegenden Erfindung liegt die Aufgabe zugrunde, ein Flurförderzeug der eingangs genannten Gattung zur Verfügung zu stellen, bei dem das Tastenfeld eine ergonomisch günstige Bedienung ermöglicht und im Betrieb des Flurförderzeugs sicher bedienbar ist.

Diese Aufgabe wird erfindungsgemäß dadurch gelöst, dass das Tastenfeld als Tastatur ausgebildet ist, die an dem deichselfußnahen Bereich des Deichselschaftes oder am Deichselfuß angeordnet ist. Bei der erfindungsgemäßen Anordnung des als Tastatur ausgebildeten Tastenfeldes an dem deichselfußnahen Bereich des Deichselschaftes der Deichsel bzw. an dem Deichselfuß der Deichsel kann eine gegenüber der Anordnung des Tastenfeldes an der Oberseite bzw. der Vorderseite des Antriebsteils erhöhte Position des Tastenfeldes oberhalb des Antriebsteils erzielt werden, die eine Bedienung des Tastenfeldes durch die Bedienperson in ergonomisch günstiger Weise bei aufrechter Oberkörperhaltung ohne ein Bücken ermöglicht. Zudem ist durch die erfindungsgemäße Anordnung des Tastenfeldes an dem deichselfußnahen Bereich des Deichselschaftes bzw. an dem Deichselfuß eine vor Beschädigungen geschützte Anordnung des Tastenfeldes mit geringem Bauaufwand erzielbar. Gegenüber einer Anordnung des Tastenfeldes an der Unterseite des Deichselkopfes ermöglicht die erfindungsgemäße Anordnung des Tastenfeldes an dem deichselfußnahen Bereich des Deichselschaftes oder an dem Deichselfuß ebenfalls eine sichere Bedienung während des normalen Betriebs des Flurförderzeugs, so dass das Tastenfeld bei der erfindungsgemäßen Anordnung neben einer Überprüfung der Zugangsberechtigung und Zugangskontrolle ebenfalls als Bedienelement eingesetzt werden kann, an dem von der Bedienperson Betriebs- und Fahrparameter des Flurförderzeugs im Betrieb des Flurförderzeugs eingegeben und verändert werden können. Ein als Tastatur ausgebildetes Tastenfeld kann auf einfache Weise zur Zugangsberechtigung bzw. Zugangskontrolle und Eingabe eines PIN-Codes verwendet werden. Zudem kann ein als Tastatur ausgebildetes Tastenfeld auf einfache Weise als Bedienelement zur Eingabe und Veränderung von Betriebs- und Fahrparametern verwendet werden.

Gemäß einer bevorzugten Ausführungsform der Erfindung weist der Deichselschaft einen zweiteiligen Aufbau mit einem deichselfußnahen Teil und einem deichselkopfnahen Teil auf, wobei der deichselfußnahe Teil und der deichselkopfnahe Teil über ein Gelenk mit einer im Wesentlichen horizontalen Schwenkachse miteinander verbunden sind, und das Tastenfeld an dem deichselfußnahen Teil angeordnet ist. Derartige knickbare oder klappbare Deichseln ermöglichen einen Betrieb des Flurförderzeugs mit langer bzw. ausgeklappter Deichsel sowie kurzer bzw. eingeklappter Deichsel. Flurförderzeuge mit derartigen klappbaren bzw. knickbaren Deichseln sind beispielsweise aus der DE 10 2006 001 689 A1 oder der EP 1 238 896 B1 bekannt. Die erfindungsgemäße Anordnung des Tastenfeldes an dem deichselfußnahen Teil eines zweiteiligen Deichselschaft einer Deichsel ergibt weitere Vorteile, da sowohl in der eingeklappten Stellung als auch in der ausgeklappten Stellung der Deichsel eine gegenüber dem Antriebsteil erhöhte Position des Tastenfeldes erzielt wird, die eine günstige ergonomische Bedienung des Tastenfeldes ermöglicht.

Sofern gemäß einer bevorzugten Ausgestaltungsform der Erfindung das Tastenfeld in der eingeklappten Stellung der Deichsel an der Oberseite des deichselfußnahen Teils angeordnet ist, ergeben sich weitere Vorteile, da im Betrieb des Flurförderzeugs mit einer in der eingeklappten Stellung befindlichen Deichsel das Tastenfeld von der Bedienperson eingesehen und sicher bedient werden kann. Zudem ergibt sich in der eingeklappten Stellung der Deichsel weiterhin eine vor Beschädigungen geschützte Anordnung des Tastenfeldes, da die Oberseite des deichselfußnahen Teils mit dem darin angeordneten Tastenfeld von dem deichselkopfnahen Teil und dem daran angeordneten Deichselkopf vor herabfallenden Teilen geschützt wird.

Vorteilhafterweise ist die Deichsel mit dem Deichselfuß an der Oberseite des Antriebsteils des Flurförderzeugs angeordnet. Bei einer derartigen Anordnung der Deichsel an der Oberseite des Antriebsteils kann bei der erfindungsgemäßen Anordnung des Tastenfeldes an dem Deichselfuß bzw. an dem deichselfußnahen Bereich des Deichselschaftes eine ergonomisch günstige Anordnung des Tastenfeldes oberhalb des Antriebsteils erzielt werden, wobei bei einer derartigen Anlenkung der Deichsel an dem Antriebsteil ebenfalls in Verbindung mit einer klappbaren bzw. knickbaren Deichsel ein Betrieb des Flurförderzeugs mit langer bzw. kurzer Deichsel ermöglicht wird.

Hinsichtlich eines günstigen Einbaus des Tastenfeldes ergeben sich Vorteile, wenn der Deichselschaft bzw. der Deichselfuß mit einer Ausnehmung zur Aufnahme des Tästenfeldes versehen ist. Das Tastenfeld kann in einer Ausnehmung des Deichselschaftes, der in der Regel eine stabile Bauweise als Blechbauteil, Gußbauteil oder Kunststoffbauteil aufweist, auf einfache Weise und vor Beschädigungen geschützt eingebaut werden. Zudem ermöglicht der Einbau des Tastenfeldes in eine entsprechende Ausnehmung des Deichselschaftes eine einfache Ausrüstung oder Nachrüstung des Flurförderzeugs mit einem Tastenfeld.

Bevorzugt ist die Tastatur als Folientastatur ausgebildet.

Gemäß einer vorteilhaften Ausführungsform der Erfindung ist das Flurförderzeug zum wahlweisen Betrieb im Mitgängerbetrieb und Mitfahrerbetrieb ausgebildet und mit einer klappbaren Fahrerstandplattform versehen. Die erfindungsgemäße Anordnung des Tastenfeldes an dem deichselfußnahen Bereich des Deichselschaftes bzw. an dem Deichselfuß der Deichsel ermöglicht eine erhöhte Position des Tastenfeldes oberhalb des Antriebsteils, wobei insbesondere im Mitfahrerbetrieb, bei der die Bedienperson auf der ausgeklappten Fahrerstandplattform in einer gegenüber der Fahrbahn erhöhten Position steht, eine ergonomisch günstige Anordnung des Tastenfeldes erzielbar ist, die von der auf der Fahrerstandplattform stehenden Bedienperson bei aufrechter Körperhaltung ohne Bücken des Oberkörpers erreicht werden kann. In Verbindung mit einer klappbaren bzw. knickbaren mehrteiligen Deichsel und einer Anordnung des Tastenfeldes an der Oberseite des deichselfußnahen Teil der mehrteiligen Deichsel ergibt sich bei einem derartigen Flurförderzeug für den Mitgängerbetrieb und den Mitfahrerbetrieb insbesondere im Mitfahrerbetrieb bei eingeklappter Deichsel eine Einsehbarkeit und Zugänglichkeit des Tastenfeldes an der Oberseite des deichselfußnahen Teils während des Betriebs des Flurförderzeugs, so dass das Tastenfeld im Betrieb des Flurförderzeugs sicher betätigt und bedient werden kann.

Gemäß einer vorteilhaften Ausführungsform ist in der eingeklappten Stellung der Deichsel der deichselfußnahe Teil von einer Position der Bedienperson weggeneigt und erstreckt sich der deichselkopfnahe Teil zur Position der Bedienperson. Hierdurch ist zum einen das an der Oberseite des deichselfußnahe Teils angeordnete Tastenfeld aufgrund einer geneigten Anordnung im Mitfahrerbetrieb optimal einsehbar und bedienbar, wobei sich gleichzeitig der Deichselkopf in einer ergonomisch günstigen Position in Bezug auf Höhe und Längsanordnung zu der auf der Fahrerstandplattform stehenden Bedienperson im Mitfahrerbetrieb befindet.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Flurförderzeug in einer persepektivischen Darstellung,
- Figur 2: die Oberseite des Antriebsteils eines erfindungsgemäßen Flurförderzeugs mit einer Deichsel in einer vergrößerten perspektivischen Darstellung und
- Figur 3: die Deichsel in einer perspektivischen Darstellung.

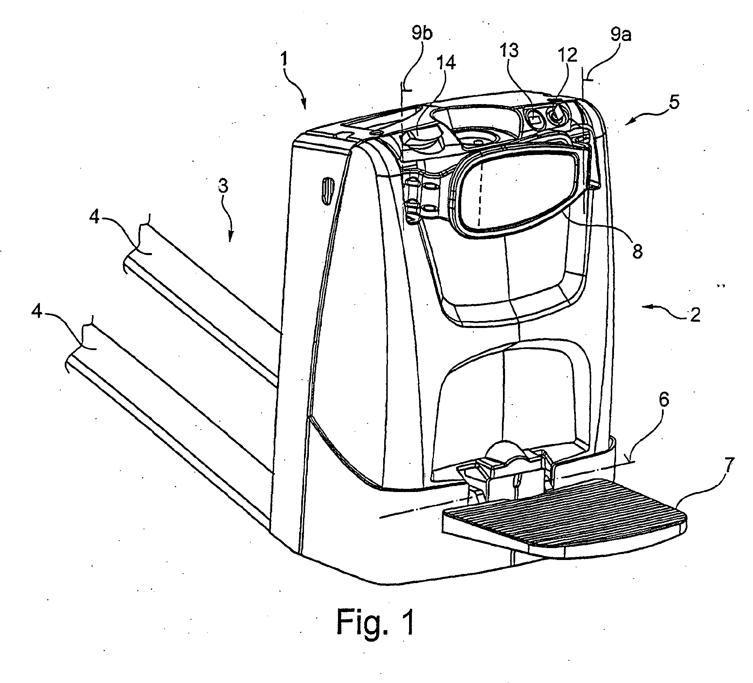

In der Figur 1 ist ein erfindungsgemäßes deichselgeführtes Flurförderzeug 1, das beispielsweise als Hubwagen, insbesondere Niederhubwagen, ausgebildet ist, dargestellt. Das Flurförderzeug 1 weist einen Antriebsteil 2 und einen relativ zu dem Antriebsteil 2 anhebbaren und absenkbaren Lastteil 3 auf. Der Lastteil 3 umfasst eine von beispielsweise zwei seitlich beabstandeten Lastarmen 4 gebildete Lastgabel.

Mittels an den Spitzen der Lastarme 4 angeordneten und nicht mehr dargestellter Lastrollen ist der Lastteil 3 auf einer Fahrbahn abgestützt.

In dem Antriebsteil 2 ist eine nicht mehr dargestellte Fahrantriebseinheit, die ein Antriebsrad und einen das Antriebsrad antreibenden elektrischen Fahrantriebsmotor umfasst, um eine vertikale Schwenkachse lenkbar angeordnet ist. Das Lenken und die Bedienung des Lagertechnikstaplers 1 durch eine Bedienperson erfolgt mittels einer in der Figur 1 nicht näher dargestellten Deichsel, die an der Oberseite des Antriebsteils 2 in dessen mittleren Bereich angeordnet ist.

Das erfindungsgemäße Flurförderzeug 1 ist zum wahlweisen Betrieb im Mitgängerbetrieb und im Mitfahrerbetrieb vorgesehen. Hierzu ist an dem Antriebsteil 2 gegenüberliegend zu dem Lastteil 3 ein Fahrerplatzmodul 5 angeordnet, das eine um eine horizontale Schwenkachse 6 klappbar am Antriebsteil 2 angeordnete Fahrerstandplattform 7 und zwei der Fahrerstandplattform 7 zugeordnete, schwenkbare Seitenbügel 8 umfasst, die um jeweils eine vertikale Schwenkachse 9a, 9b an den seitlichen Bereichen des Antriebsteil 2 schwenkbar angeordnet sind.

In der Vorderseite des Antriebsteils 2 sind für die eingeklappte Fahrerstandplattform 7 und die eingeklappten Seitenbügel 8 jeweils eine Ausbuchtung vorhanden, so dass im Mitgängerbetrieb bei eingeklappter Fahrerstandplattform 7 und eingeklappten Seitenbügeln 8 die Fahrerstandplattform 7 und die Seitenbügel 8 innerhalb der Kontur des Antriebsteils 2 angeordnet sind.

In der Figur 1 ist das Flurförderzeug 1 im Mitfahrerbetrieb mit ausgeklappter Fahrerstandplattform 7 und eingeklappten Seitenbügeln 8 dargestellt.

Durch Verschwenken der Seitenbügel 8 um die entsprechende Schwenkachse 9a, 9b nach Außen kann das Flurförderzeug 1 in eine Stellung für den Mitfahrerbetrieb gebracht werden, in der die in der ausgeklappten Stellung befindlichen beiden Seitenbügel 8a, 8b einer auf der Fahrerstandplattform 7 stehenden Bedienperson zusätzlich seitlichen Halt bieten.

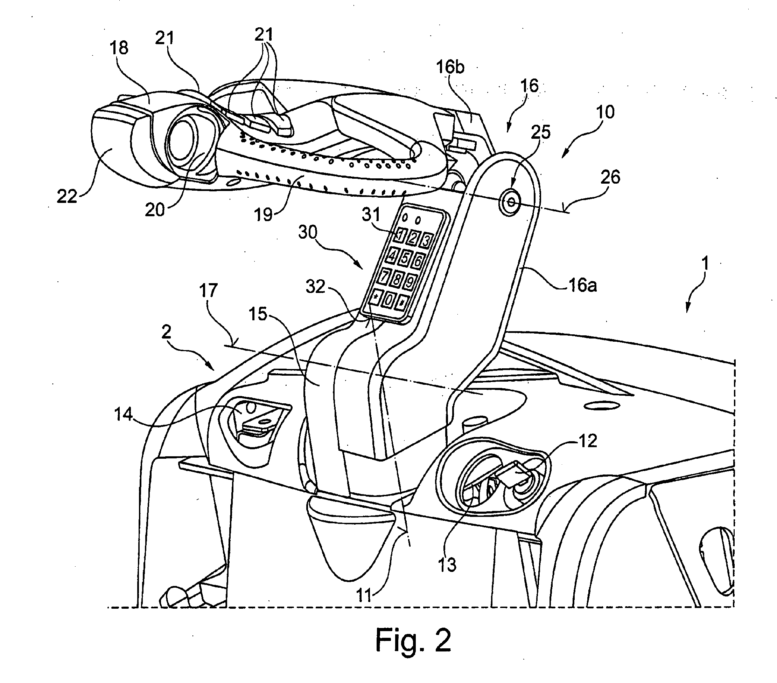

In der Figur 2 ist der Antriebsteil 2 des Flurförderzeugs 1 mit der mittig an der Oberseite angeordneten Deichsel 10 dargestellt. Die Deichsel 10 ist an der Oberseite des Antriebsteils 2 an dem antriebsteilseitigen Ende des Flurförderzeugs 1 um eine im Wesentlichen vertikale Schwenkachse 11 schwenkbar angeordnet. An der Oberseite des Antriebsteils 2 sind an dem antriebsteilseitigen Ende des Flurförderzeugs 1 weiterhin ein Schlüsselschalter 12, ein Display 13 und ein Not-Aus-Schalter 14 im Bereich einer Abdeckung des Antriebsteils 2 angeordnet.

Die Deichsel 10 weist einen Deichselfuß 15 auf, der an dem Antriebsteil 2 um eine vertikale Schwenkachse 11 schwenkbar angeordnet ist. An dem Deichselfuß 15 ist ein Deichselschaft 16 der Deichsel 10 mit einem deichselfußnahen Bereich um eine im Wesentlichen horizontale Schwenkachse 17 schwenkbar gelagert. An einem deichselkopfseitigen Bereich des Deichselschaftes 17 ist ein Deichselkopf 18 angeordnet, der mit Handgriffen 19 und Bedienelementen versehen ist, beispielsweise als Flügelschaltern ausgebildeten Fahrschaltern 20 im Bereich der Handgriffe 19 zur Steuerung der Fahrtrichtung und der Fahrgeschwindigkeit des Fahrantriebs, als Tastschalter an der Oberseite des Deichselkopfes 18 angeordneten Schaltern 21 zur Steuerung des Hubantriebs zum Heben/Senken des Lastteils 3 und zur Steuerung einer von einer Hupe gebildete Signaleinrichtung sowie einem als Druckschalter ausgebildeter Sicherheitsschalter 22 an der der Bedienperson zugewandten Stirnseite des Deichselkopfes 18.

Die Deichsel 10 ist in dem dargestellten Ausführungsbeispiel als klappbare Deichsel mit einem zweiteiligen Deichselschaft 16 ausgebildet, wobei der Deichselschaft 16 einen deichselfußnahen Teil 16a und einen deichselkopfnahen Teil 16b umfasst. Mit dem deichselfußnahen Teil 16a ist der Deichselschaft 16 an dem Deichselfuß 15 um die horizontale Schwenkachse 17 schwenkbar gelagert. Der deichselkopfnahe Teil 16b ist mit dem Deichselkopf 18 versehen. Zwischen dem deichselfußnahen Teil 16a und dem deichselkopfnahen Teil 16b ist ein Gelenk 25 mit einer im Wesentlichen horizontalen Schwenkachse 26 ausgebildet, mit dem die beiden Teile 16a, 16b des Deichselschaftes 16 klappbar miteinander verbunden sind.

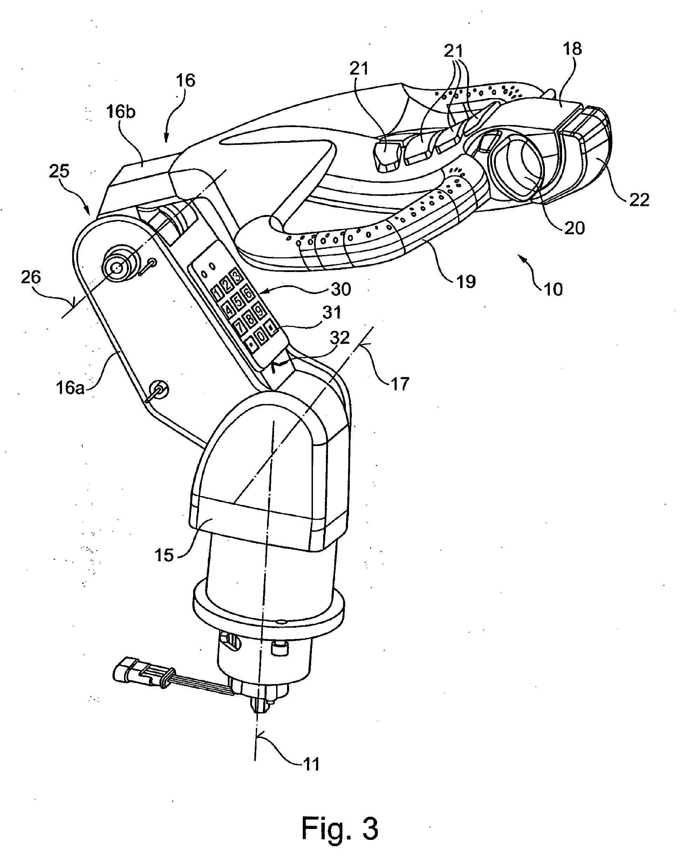

In den Figuren 2 und 3 befindet sich die Deichsel 16 in einer eingeklappten Stellung ("kurze Deichsel") für den Mitfahrerbetrieb des Flurförderzeugs 1 mit einer auf der ausgeklappten Fahrerstandplattform 7 stehenden Bedienperson. Der deichselfußnahe Teil 16a des Deichselschaftes 16 ist hierbei um die Schwenkachse 17 in Richtung zu dem Lastteil 3 abgewinkelt und befindet sich oberhalb des Antriebsteils 2 in einer von der auf der ausgeklappten Fahrerstandplattform 7 stehenden Bedienperson weggeneigten Stellung. Der deichselkopfnahe Teil 16b des Deichselschaftes 16 ist um die Schwenkachse 26 gegenüber dem deichselfußnahen Teil 16a abgewinkelt und erstreckt sich in Richtung des antriebsteilseitigen Endes des Flurförderzeugs mit der Fahrerstandplattform 7 und somit in Richtung zur der auf der ausgeklappten Fahrerstandplattform 7 stehenden Bedienperson.

In einer ausgeklappten Stellung ("lange Deichsel") für den Mitgängerbetrieb des Flurförderzeugs 1 bei hochgeklappter Fahrerstandplattform 7 ist der deichselfußnahe Teil 16a um die Schwenkachse 17 in Richtung des antriebsteilseitigen Endes des Flurförderzeugs 1 verschwenkt und der deichskopfnahe Teil 16b erstreckt sich in Verlängerung des deichselfußnahen Teils 16a.

Erfindungsgemäß ist an dem Deichselschaft 16 an dessen deichselfußnahen Abschnitt ein als Tastatur 31 ausgebildetes Tastenfeld 30 angeordnet. Das Tastenfeld 30 ist hierbei bevorzugt als Folientastatur ausgebildet. Das von der Tastatur 31 gebildete Tastenfeld 30 ist hierbei an dem deichselfußnahen Teil 16a des zweiteiligen Deichselschaftes 16 derart angeordnet, dass sich das Tastenfeld 30 in der in den Figuren 2 und 3 dargestellten eingeklappten Stellung der Deichsel 10 an der Oberseite des deichselfußnahen Teil 16a befindet.

Der Deichselschaft 16 ist zur Aufnahme und Befestigung des Tastenfeldes 30 mit einer entsprechenden Ausnehmung 32 versehen.

Durch die erfindungsgemäße Anordnung des Tastenfeldes 30 an dem deichselfußnahen Bereich des Deichselschaftes 16 wird eine ergonomisch günstige Anordnung des Tastenfeldes 30 oberhalb des Antriebsteils 2 in einer ergonomisch günstigen Höhe erzielt, so dass eine Bedienperson, insbesondere eine im Mitfahrerbetrieb auf der ausgeklappten Fahrerstandplattform 7 stehende Bedienperson das Tastenfeld 30 mit aufrechter Körperhaltung ohne Bücken des Oberkörpers erreichen und betätigen kann.

In der dargestellten eingeklappten Stellung der Deichsel 10 für den Mitfahrerbetrieb ist durch die erfindungsgemäße Anordnung an der Oberseite des deichselfußnahen Teils 16a das Tastenfeld 30 weiterhin für die Bedienperson gut sichtbar und somit sicher betätigbar.

Zudem ergibt sich in der eingeklappten Stellung der Deichsel eine geschützte Anordnung des Tastenfeldes 30, das sich unterhalb des deichselkopfseitigen Teils 16b und dem daran befindlichen Deichselkopf 18 befindet. Die Anordnung des Tastenfeldes 30 in dem Deichselschaft 16 ergibt zudem ebenfalls bei ausgeklappter Stellung der Deichsel 16 eine vor Beschädigungen geschützte Anordnung des Tastenfeldes 30 innerhalb der Ausnehmung 32 des Deichselschaftes 16.

Zudem wird durch die erfindungsgemäße Anordnung des Tastenfeldes 30 an dem Deichselschaft 16 eine einfache Ausrüstung oder Nachrüstung des Flurförderzeugs 1 mit dem Tastenfeld 30 ermöglicht.

Das in ergonomisch günstiger Weise platzierte erfindungsgemäße Tastenfeld 30 an dem Deichselschaft 16 in dem deichselfußnahen Bereich kann zur Überwachung der Zugangsberechtigung bzw. als Zugangskontrolle durch Eingabe eines PIN-Codes verwendet werden und/oder als zusätzliches Bedienelement zur Eingabe und Änderungen von Fahr- bzw. Betriebsparametern des Flurförderzeugs eingesetzt werden.

Die erfindungsgemäße Anordnung des Tastenfeldes 30 oberhalb des Antriebsteils 2 ist ebenfalls bei einer Deichsel 10 mit einem einteiligen Deichselschaft 16 möglich. Bei einer einteiligen Ausführung des Deichselschaftes 16 ist das in den Figuren 2 und 3 schwenkbare deichselfußnahe Teil 16a an dem Deichselfuß 15 fest angeordnet und bildet einen Bestandteil des Deichselfußes 15. Bei einer derartigen Deichsel 10 mit einteiligen Deichselschaft 16 bildet der deichselkopfnahe Teil 16b den schwenkbaren Deichselschaft 16, der um die Schwenkachse 26 an dem Deichselfuß 15 schwenkbar angeordnet ist, so dass das Tastaturfeld 30 an dem Deichselfuß 15 in der Ausnehmung 32 angeordnet ist.

## Patentansprüche

1. Deichselgeführtes Flurförderzeug (1), insbesondere Hubwagen, mit einer Deichsel (10), die einen Deichselfuß (15), einen Deichselschaft (16) und einen Deichselkopf (18) umfasst, wobei die Deichsel (10) mittels des Deichselfußes (15) an einem Antriebsteil (2) des Flurförderzeugs (1) um eine im Wesentlichen vertikale Schwenkachse (11) schwenkbar gelagert ist und der Deichselschaft (16) an einem deichselfußnahen Bereich an dem Deichselfuß (15) um eine im Wesentlichen horizontale Schwenkachse (26) schwenkbar gelagert ist und an einem deichselkopfnahen Bereich mit dem Deichselkopf (18) versehen ist, wobei das Flurförderzeug (1) mit einem Tastenfeld (30) versehen ist, **dadurch gekennzeichnet, dass** das Tastenfeld (30) als Tastatur (31) ausgebildet ist, die an dem deichselfußnahen Bereich des Deichselschaftes (16) oder am Deichselfuß (15) angeordnet ist.

2. Deichselgeführtes Flurförderzeug nach Anspruch 1, **dadurch gekennzeichnet, dass** der Deichselschaft (16) einen zweiteiligen Aufbau mit einem deichselfußnahen Teil (16a) und einem deichselkopfnahen Teil (16b) aufweist, wobei der deichselfußnahe Teil (16a) und der deichselkopfnahe Teil (16b) über ein Gelenk (25) mit einer im Wesentlichen horizontalen Schwenkachse (26) miteinander verbunden sind, wobei das Tastenfeld (30) an dem deichselfußnahen Teil (16a) angeordnet ist.

3. Deichselgeführtes Flurförderzeug nach Anspruch 2, **dadurch gekennzeichnet, dass** das Tastenfeld (30) in einer eingeklappten Stellung der Deichsel (10) an der Oberseite des deichseifußnahen Teils (16a) angeordnet ist.

4. Deichselgeführtes Flurförderzeug nach einem der Ansprüche 1 bis 3, **dadurch gekennzeichnet, dass** die Deichsel (10) mit dem Deichselfuß (15) an der Oberseite des Antriebsteils (2) des Flurförderzeugs (1) angeordnet ist.

5. Deichselgeführtes Flurförderzeug nach einem der Ansprüche 1 bis 4, **dadurch gekennzeichnet, dass** der Deichselschaft (16) oder der Deichselfuß (15) mit einer Ausnehmung (32) zur Aufnahme des Tastenfeldes (30) versehen ist.

6. Deichselgeführtes Flurförderzeug nach einem der Ansprüche 1 bis 5, **dadurch gekennzeichnet, dass** die Tastatur (31) als Folientastatur ausgebildet ist.

7. Deichselgeführtes Flurförderzeug nach einem der vorangegangenen Ansprüche, **dadurch gekennzeichnet, dass** das Flurförderzeug (1) zum wahlweisen Betrieb im Mitgängerbetrieb und Mitfahrerbetrieb ausgebildet ist und mit einer klappbaren Fahrerstandplattform (7) versehen ist.

8. Deichselgeführtes Flurförderzeug nach einem der Ansprüche 2 bis 7, **dadurch gekennzeichnet, dass** in der eingeklappten Stellung der Deichsel (10) der deichselfußnahe Teil (16a) von einer Position einer Bedienperson weggeneigt ist und sich der deichselkopfnahe Teil (16b) zur Position der Bedienperson erstreckt.

## Claims

1. Drawbar-guided industrial truck, in particular fork lift truck, having a drawbar (10) which comprises a drawbar foot (15), a drawbar shaft (16) and a drawbar head (18), wherein the drawbar (10) is mounted on a drive part (2) of the industrial truck (1) so as to be pivotable about a substantially vertical pivoting axis (11) by means of the drawbar foot (15), and the drawbar shaft (16) is mounted on a region on the drawbar foot (15), which is near to the drawbar foot, so as to be pivotable about a substantially horizontal pivoting axis (26) and is provided with the drawbar head (18) on a region near to the drawbar head, wherein the industrial truck (1) is provided with a keypad (30), **characterized in that** the keypad (30) is embodied as an array (31) of keys which is arranged at the region of the drawbar shaft (16) which is near to the drawbar foot or on the drawbar foot (15).

2. Drawbar-guided industrial truck according to Claim 1, **characterized in that** the drawbar shaft (16) has a two-component design with a part (16a) which is near to the drawbar foot and a part (16b) which is near to the drawbar head, wherein the part (16a) which is near to the drawbar foot and the part (16b) which is near to the drawbar head are connected to one another via a joint (25) with a substantially horizontal pivoting axis (26), wherein the keypad (30) is arranged on the part (16a) which is near to the drawbar foot.

3. Drawbar-guided industrial truck according to Claim 2, **characterized in that** in a folded-in position of the drawbar (10) the keypad (30) is arranged on the upper side of the part (16a) which is near to the drawbar foot.

4. Drawbar-guided industrial truck according to one of Claims 1 to 3, **characterized in that** the drawbar (10) is arranged with the drawbar foot (15) on the upper side of the drive part (2) of the industrial truck (1).

5. Drawbar-guided industrial truck according to one of Claims 1 to 4, **characterized in that** the drawbar shaft (16) or the drawbar foot (15) is provided with a recess (32) for holding the keypad (30).

6. Drawbar-guided industrial truck according to one of Claims 1 to 5, **characterized in that** the array (31) of keys is embodied as film key array.

7. Drawbar-guided industrial truck according to one of the preceding claims, **characterized in that** the industrial truck (1) is designed for optional operation in the pedestrian mode and passenger mode and is provided with a foldable driver standing platform (7).

8. Drawbar-guided industrial truck according to one of Claims 2 to 7, **characterized in that** in the folded-in position of the drawbar (10) the part (16a) which is near to the drawbar foot is inclined away from a position of an operator and the part (16b) which is near to the drawbar head extends to the position of the operator.

## Revendications

1. Chariot de manutention commandé par timon (1), en particulier chariot élévateur, comprenant un timon (10) qui comprend un pied de timon (15), un arbre de timon (16) et une tête de timon (18), le timon (10) étant supporté au moyen du pied de timon (15) sur une partie d'entraînement (2) du chariot de manutention (1) de manière à pouvoir pivoter autour d'un axe de pivotement essentiellement vertical (11) et l'arbre de timon (16) étant monté sur le pied de timon (15) au niveau d'une région proche du pied de timon de manière à pouvoir pivoter autour d'un axe de pivotement essentiellement horizontal (26) et étant pourvu de la tête de timon (18) au niveau d'une région proche de la tête de timon, le chariot de manutention (1) étant pourvu d'un champ de touches (30), **caractérisé en ce que** le champ de touches (30) est réalisé sous forme de clavier (31) qui est disposé au niveau de la région de l'arbre de timon (16) proche du pied de timon ou au niveau du pied de timon (15).

2. Chariot de manutention guidé par timon selon la revendication 1, **caractérisé en ce que** l'arbre de timon (16) présente une construction en deux parties avec une partie proche du pied de timon (16a) et une partie proche de la tête de timon (16b), la partie proche du pied de timon (16a) et la partie proche de la tête de timon (16b) étant connectées l'une à l'autre par le biais d'une articulation (25) ayant un axe de pivotement essentiellement horizontal (26), le champ de touches (30) étant disposé au niveau de la partie proche du pied de timon (16a).

3. Chariot de manutention guidé par timon selon la revendication 2, **caractérisé en ce que** le champ de touches (30), dans une position rabattue du timon (10), est disposé sur le côté supérieur de la partie proche du pied de timon (16a).

4. Chariot de manutention guidé par timon selon l'une quelconque des revendications 1 à 3, **caractérisé en ce que** le timon (10) avec le pied de timon (15) est disposé au niveau du côté supérieur de la partie d'entraînement (2) du chariot de manutention (1).

5. Chariot de manutention guidé par timon selon l'une quelconque des revendications 1 à 4, **caractérisé en ce que** l'arbre de timon (16) ou le pied de timon (15) est muni d'un évidement (32) pour recevoir le champ de touches (30).

6. Chariot de manutention guidé par timon selon l'une quelconque des revendications 1 à 5, **caractérisé en ce que** le clavier (31) est réalisé sous forme de clavier à effleurement.

7. Chariot de manutention guidé par timon selon l'une quelconque des revendications précédentes, **caractérisé en ce que** le chariot de manutention (1) est réalisé de manière à permettre un fonctionnement au choix à conducteur accompagnant ou à conducteur porté et est pourvu d'une plate-forme de station debout rabattable (7) pour le conducteur.

8. Chariot de manutention guidé par timon selon l'une quelconque des revendications 2 à 7, **caractérisé en ce que** dans la position rabattue du timon (10), la partie proche du pied de timon (16a) est inclinée à l'écart d'une position d'un opérateur et la partie proche de la tête de timon (16b) s'étend vers la position de l'opérateur.
